Europäisches Patentamt

European Patent Office

Office européen des brevets

(19)

(11) Veröffentlichungsnummer : **0 168 586**
**B1**

(12) **EUROPÄISCHE PATENTSCHRIFT**

(45) Veröffentlichungstag der Patentschrift :
15.03.89

(21) Anmeldenummer : 85105976.6

(22) Anmeldetag : 15.05.85

(51) Int. Cl.⁴ : **F 02 D   1/18**

(54) **Kraftstoffeinspritzpumpe.**

(30) Priorität : **22.06.84 DE 3423212**

(43) Veröffentlichungstag der Anmeldung :
**22.01.86 Patentblatt 86/04**

(45) Bekanntmachung des Hinweises auf die Patenterteilung : **15.03.89 Patentblatt 89/11**

(84) Benannte Vertragsstaaten :
**AT DE FR GB**

(56) Entgegenhaltungen :
**DE--A-- 1 912 919**
**DE--A-- 2 158 689**
**DE--A-- 3 121 107**
**GB--A-- 2 017 350**
**GB--A-- 2 069 723**
**GB--A-- 2 070 686**
**GB--A-- 2 111 252**
**US--A-- 3 815 564**

(73) Patentinhaber : **ROBERT BOSCH GMBH**
**Postfach 50**
**D-7000 Stuttgart 1 (DE)**

(72) Erfinder : **Faupel, Werner**
**Brennerstrasse 52**
**D-7016 Gerlingen (DE)**
Erfinder : **Höfer, Gerald**
**Schönblickstrasse 16**
**D-7251 Weissach-Flacht (DE)**

## Beschreibung

Stand der Technik

Die Erfindung geht aus von einer Kraftstoffeinspritzpumpe nach der Gattung des Hauptanspruchs.

Bei Dieselmotoren ändert sich bekanntlich der tatsächliche Kraftstoffverbrauch pro Hub mit der Drehzahl. Während die Fördermenge pro Hub der Einspritzpumpe mit steigender Drehzahl zunimmt, fällt die Mengenbedarfskennlinie des Motors ab einer bestimmten Drehzahl ab. Die Einspritzmenge muß deshalb bei Vollast dem Bedarf angeglichen werden. Zuviel eingespritzter Kraftstoff bedeutet Rauchentwicklung bzw. Überhitzung des Dieselmotors. Abgesehen davon wird durch diese Angleichung der Kraftstoffverbrauch reduziert und die Drehmomentcharakteristik verbessert.

Bei bekannten Kraftstoffeinspritzpumpen dieser Art (Bosch Verteilereinspritzpumpe, Typ VE) wird deshalb üblicherweise diese Vollastangleichung durch das Druckventil auf der Hochdruckseite der Pumpe und/oder mittels einer erweiterten Regelhebelgruppe erzielt. Eine Vollastangleichung mit der Regelhebelgruppe wird dann vorgenommen, wenn die Druckventile für die Angleichung nicht mehr ausreichen oder spezielle zusätzliche Kenngrößen mit der Angleichung berücksichtigt werden sollen, wie beispielsweise der Ladedruck eines Turboladers oder der Atmosphärendruck.

Außer der Vollastmenge muß auch der Förderbeginn lastabhängig korrigiert werden. Der lastabhängige Förderbeginn ist so ausgelegt, daß bei fallender Last, beispielsweise von Vollast auf Teillast (Zurücknehmen des Gashebels), eine Verstellung in Richtung « spät » vorgenommen wird. Bei zunehmender Last erfolgt eine Verringerung der Drehzahl und der lastabhängige Förderbeginnverstellt den Einspritzzeitpunkt in Richtung « spät » Hierdurch wird ein weicherer Motorlauf, sowie eine geringere Geräuschemission erzielt. Bei einer bekannten Kraftstoffeinspritzpumpe der eingangs genannten Art (DE-A-21 58 689) arbeitet der Drehzahlregler mit einer Reglermuffe, an der die Fliehgewichte angreifen, und die ein Ventil steuert, durch das der mit steigender Drehzahl steigende Förderpumpendruck ab einer bestimmten Drehzahl in seiner Progression vermindert wird, so daß eine relative Spätverschiebung des Spritzverstellkolbens und damit des Spritzbeginns die Folge ist. Da durch den Verstellhebel des Reglers eine bestimmte Solldrehzahl bzw. ein bestimmter Lastzustand vorgegeben wird, für den der Regler u. a. durch Verstellen der Reglermuffe die erforderliche Einspritzmenge einstellt, bewirkt dieses Ventil eine lastabhängige Änderung des Förderpumpendrucks und damit ·des Spritzbeginns.

Bei einer anderen bekannten Kraftstoffeinspritzpumpe (DE-A-19 12919) wird ein Vollastanschlag durch einen vom sich drehzahlabhängig ändernden Förderpumpendruck beaufschlagten Kolben erzielt, auf dessen Mantelfläche eine Kurve angeordnet ist, die von einem Winkelhebel abgegriffen wird, dessen einer Arm als Vollastanschlag des Reglerhebels des Drehzahlreglers dient. Irgendwelche Schwankungen des Förderpumpendruckes bewirken hier gleichzeitig ein Ändern oder Schwanken in der Angleichung, was sich in einem verschlechterten Lauf der Brennkraftmaschine äußert.

Nach einer Weiterentwicklung (DE-A-31 21107) dieser bekannten Kraftstoffeinspritzpumpe ist im Zuflußkanal zum Arbeitsraum des Kolbens eine Drossel vorgesehen und in einem Abflußkanal dieses Arbeitsraumes ein Magnetventil, das in Abhängigkeit von Last- und Drehzahl der Brennkraftmaschine durch ein elektronisches Steuergerät angesteuert wird. Erforderliche Geberwerte werden lastabhängig verstellbaren Gliedern des Reglers entnommen.

Direkteinspritzmotoren reagieren auf Laständerungen von Vollast auf Teillast bezüglich verspäteter Korrektur des Spritzbeginns nach « spät » besonders empfindlich. Wenn — wie bei allen bekannten Kraftstoffeinspritzpumpen die Spritzverstellung der Laständerung nachhinkt, bewirkt dieses Verschlechterungen im Verbrauch, dem Geräusch und der Emission. Beim Kraftfahrzeugmotor werden derartige Änderungen von Vollast auf Teillast laufend vorgenommen, nämlich immer, wenn das Gaspedal zurückgenommen wird.

Eine Kraftstoffeinspritzpumpe der gattungsgemäßen Art ist durch die JP-B2-59-5778 bekannt. Dort wird mit Hilfe des Schalters das Magnetventil betätigt und somit der auf den Verstellkolben wirkende Druck im Arbeitsraum oder im Rückstellraum beeinflußt. Diese bekannte Kraftstoffeinspritzpumpe weist als Anschlag für das lastabhängig verstellbare Glied einen ortsfesten Anschlag auf. Somit weist diese Kraftstoffeinspritzpumpe den Nachteil auf, daß die Vollasteinspritzmenge nicht den Erfordernissen bei Drehzahländerung angeglichen werden kann.

Durch die GB-A-21 11 252 ist zwar eine Kraftstoffeinspritzpumpe bekannt, die einen in Abhängigkeit von einem drehzahlabhängigen Druck verstellbaren Vollastanschlag aufweist, doch ist dort kein lastabhängiges Steuern des Spritzbeginns vorgesehen. Soll eine solche Verstellung vorgesehen werden, so ist es durch die DE-A-21 58 689 bekannt, den Druck im Saugraum neben der drehzahlabhängigen Beeinflussung auch noch in Abhängigkeit von der Last zu beeinflussen. Dies hat jedoch den Nachteil, daß damit zugleich die vorgesehene Verstellung des Vollastanschlags auch lastabhängig beeinflußt wird, so daß eine einwandfreie Angleichung der Vollasteinspritzmenge nicht in allen Betriebspunkten der Brennkraftmaschine gewährleistet ist.

Vorteile der Erfindung

Die erfindungsgemäße Kraftstoffeinspritzpumpe mit den kennzeichnenden Merkmalen des Hauptanspruchs hat demgegenüber den Vorteil, daß bei Laständerungen von Volllast auf Teillast eine von der Drehzahl so lange unabhängige Korrektur der Spritzverstellung nach « spät » erfolgt, bis das lastabhängig verstellbare Glied des Drehzahlreglers wieder am Vollastanschlag anliegt. Hierdruch wird als Signal für die Spritzverstellung in Richtung « spät » die Laständerung und nicht die Drehzahl verwendet. Dadurch, daß vorhandene Elemente, wie das lastabhängig verstellbare Glied des Drehzahlreglers und der verstellbare Vollastanschlag, als Schalterteile dienen, kann auf teure elektrische oder elektronische Steuergeräte verzichtet werden. Beim Drehzahlregler kann es sich um einen hydraulischen oder mechanischen Regler handeln, da jeder Regler ein lastabhängig verstellbares Glied hat. Der die Mengenangleichung bewirkende Vollastanschlag ist ebenfalls bei fast jedem Regler vorgesehen, so daß die Erfindung ohne wesentliche konstruktive Änderungen bei fast jeder Kraftstoffeinspritzpumpe verwirklichbar ist.

Erfindungsgemäß kann das Magnetventil den Druck auf der Arbeitsraumseite des Verstellkolbens oder aber auf der Seite, an der die Rückstellkraft angreift, steuern.

Dies kann entweder dadurch erfolgen, daß Steuerflüssigkeit aus diesem Arbeitsraum abströmt, oder in den Rückstellraum einströmt. Unter Verwendung von Ab- oder Zuflußdrosseln sind verschiedene Varianten möglich.

Weitere Vorteile und vorteilhafte Ausgestaltungen der Erfindung sind in der Zeichnung sowie der nachfolgenden Beschreibung und den Ansprüchen entnehmbar.

Zeichnung

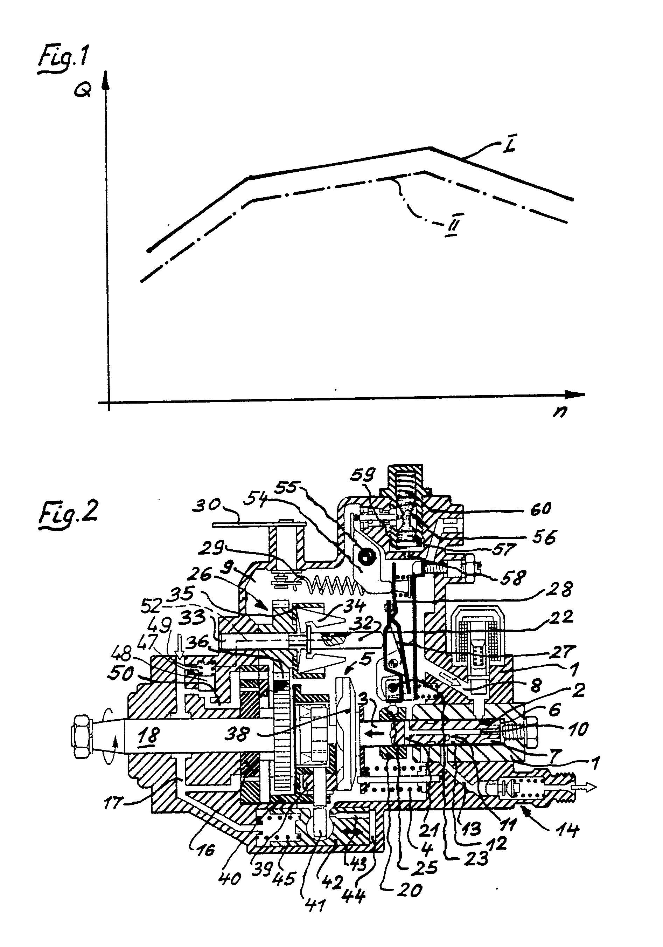

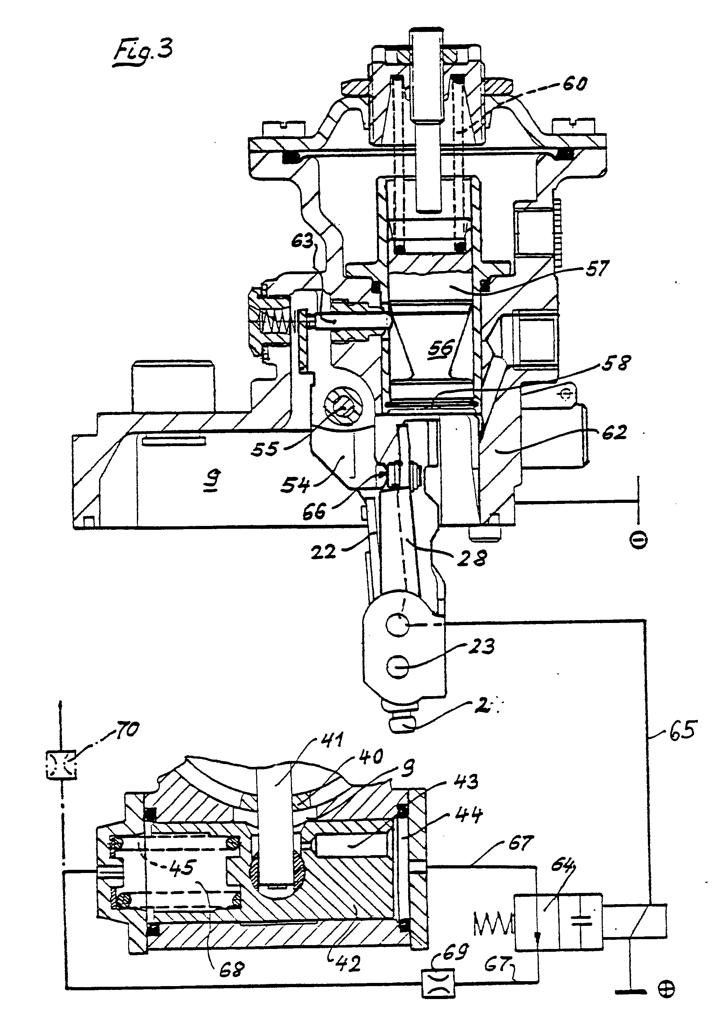

Ein Ausführungsbeispiel des Gegenstandes der Erfindung ist in der Zeichnung dargestellt und in der nachfolgenden Beschreibung näher erläutert. Es zeigen Fig. 1 ein Funktionsdiagramm mit Fördermengenbedarfskurven bei Vollast und Teillast ; Fig. 2 die vereinfachte Darstellung einer Verteilerkraftstoffeinspritzpumpe mit hydraulischem Spritzversteller im Längsschnitt und Fig. 3 das Ausführungsbeispiel der Erfindung betreffende Ausschnitte aus Fig. 1 in vergrößertem Maßstab.

Beschreibung des Erfindungsbeispiels

Bei dem in Fig. 1 dargestellten Diagramm ist über der Ordinate die Fördermenge Q und über der Abszisse die Drehzahl aufgetragen. Die dargestellten Kennlinien I und II geben jeweils den Verlauf der von der Einspritzpumpe geförderten Menge an. Bei der oberen durchgezogenen Kennlinie I handelt es sich um die Vollastkennlinie, also die an den Vollastmengenbedarf der Brennkraftmaschine angeglichene Einspritzmenge. Bei der unteren strichpunktiert dargestellten Kennlinie II handelt es sich um die Teillastkennlinie, die ebenfalls der Einspritzmenge entspricht, die die Brennkraftmaschine bei Teillast über der Drehzahl rußfrei verbrennen kann.

Während bei Vollast der Spritzbeginnzeitpunkt mit zunehmender Drehzahl auf zunehmend « früh » verstellt werden muß, verlangt die Teillast einen etwas späteren Spritzbeginn als die Vollast, wobei allerdings grundsätzlich auch bei Teillast mit zunehmender Drehzahl der Spritzbeginn auf « früher » gestellt werden muß. Bei Wechsel von Vollast auf Teillast muß somit der Spritzbeginn unabhängig von der Drehzahl möglichst schnell auf « später » verstellt werden. Als Kenngröße für einen schnellen Wechsel kann somit nicht die Drehzahl, sondern muß der Lastwechsel selber dienen, der jedem Drehzahlregler als Kenngröße eingegeben wird.

In Fig. 2 ist zur funktionellen Erläuterung eine Verteilerkraftstoffeinspritzpumpe in vereinfachter Art und in Längsschnitt dargestellt. In einem Gehäuse 1 arbeitet in einer Zylinderbohrung 2 ein Pumpenkolben 3, der entgegen der Kraft einer Rückstellfeder 4 durch einen Nockentrieb 5 in eine hin- und hergehende und gleichzeitig rotierende Bewegung versetzt wird. Der Pumpenarbeitsraum 6 dieser Pumpe wird über in der Mantelfläche des Pumpenkolbens 3 angeordnete Längsnuten 7 und einen im Gehäuse 1 verlaufenden Kanal 8 aus einem unter Überdruck stehenden Saugraum 9 mit Kraftstoff versorgt, solange der Pumpenkolben 3 einen nach unten gehenden Saughub ausführt bzw. seine untere Totpunktlage einnimmt. Nach Beginn des Druckhubs und sobald nach einer entsprechenden Verdrehung des Pumpenkolbens 3 der Kanal 8 geschlossen ist, wird der im Pumpenarbeitsraum 6 befindliche Kraftstoff in einen im Pumpenkolben verlaufenden Längskanal 10 gefördert. Aus diesem Längskanal 10 wird dann der Kraftstoff über eine abzweigende Radialbohrung 11 und eine in der Oberfläche des Pumpenkolbens angeordnete Verteilerlängsnut 12 einer von mehreren Druckleitungen 13, von denen nur eine dargestellt ist, zugeführt. Die tatsächliche Zahl der Druckleitungen 13 entspricht der Zahl der zu versorgenden Motorzylinder. Die Eingänge der Druckleitungen 13 sind um die Zylinderbohrung 2 verteilt angeordnet und in ihnen ist jeweils ein in Förderrichtung öffnendes Rückschlagventil 14 vorgesehen.

Der Saugraum 9 wird über eine Förderpumpe 16 aus einem nichtdargestellten Kraftstoffbehälter über eine Leitung 17 mit Kraftstoff versorgt. Die Förderpumpe 16 wird unmittelbar von der Antriebswelle 18 der Einspritzpumpe mit motordrehzahlproportionaler Drehzahl angetrieben und ist als volumetrische Pumpe ausgebildet, so daß die von der Pumpe geförderte Menge proportional der Antriebsdrehzahl ist, d. h., daß mit zunehmender Drehzahl eine zunehmende Menge gefördert wird.

Um den Pumpenkolben 3 herum ist ein Ringschieber 20 axial verschiebbar angeordnet, durch den eine mit dem Längskanal 10 verbundene Radialbohrung 21 während des Druckhubverlaufs des Pumpenkolbens 3 aufsteuerbar ist, wonach die Förderung aus dem Pumpenarbeitsraum 6 in eine der Druckleitungen 13 unterbrochen wird, da der Kraftstoff über die Radialbohrung 21 zurück in den Saugraum 9 strömen kann, wodurch die Einspritzung beendet wird.

Der Ringschieber 20 wird über einen Zwischenhebel 22 betätigt, der um eine ortsfeste Achse 23 schwenkbar ist und der an seinem anderen Ende mit einem Kopf 24 in eine Ausnehmung 25 des Ringschiebers 20 greift. Am anderen Ende des Zwischenhebels 22 greift ein Fliehkraftregler an und unter Zwischenschaltung einer Blattfeder 27, die als Angleichsfeder dient, über einen Reglerhebel 28 eine Regelfeder 29. Die Regelfeder 29 wird über einen Verstellhebel 30 willkürlich in der Vorspannung als « Lasteingabe » verändert.

Der Fliehkraftregler 26 weist eine Verstellmuffe 32 auf, die auf einer gehäusefesten Achse 33 axial verschiebbar angeordnet ist und mit ihrer oberen Stirnseite auf den Zwischenhebel 22 wirkt. Auf diese Muffe 32 wirken in axialer Richtung Fliehgewichte 34, die in einem Käfig 35 gelagert sind, der über ein Fahrradgetriebe 36 von der Antriebswelle 18 drehzahlsynchron angetrieben wird. Mit zunehmender Drehzahl nimmt die auf die Muffe 32 wirkende Kraft der Fliehgewichte 34 zu, so daß damit auch die in axialer Richtung am Zwischenhebel 22 angreifende Kraft der Verstellmuffe 32 zunimmt. Diese Kraft wirkt über die Hebel 22 und 28 die der Regelfeder 29 entgegen, in deren Vorspannung die Last eingegeben ist. Die durch die axiale Lage des Ringschiebers 20 festgelegte Kraftstoffeinspritzmenge ist somit abhängig von der Drehzahl sowie der willkürlich eingegebenen Federvorspannung (Last).

Der Nockentrieb 5 weist eine Nockenscheibe 38 mit Stirnnocken auf, die als umlaufender Teil drehschlüssig mit der Antriebswelle 18 verbunden ist und somit mit motordrehzahlsynchroner Drehzahl angetrieben wird. Die Nocken der Nockenscheibe 38 wirken mit Rollen 39 eines Rollenkranzes 40 so zusammen, daß der Pumpenkolben bei der Drehung der Nockenscheibe und Abrollen der Stirnnocken auf den Rollen 39 die oben erwähnte hin- und hergehende Bewegung ausführt.

Der Rollenkranz 40 ist im Gehäuse 1 drehverstellbar gelagert und über einen Arm 41 mit einem in einem Zylinder verschiebbaren Spritzverstellkolben 42 verbunden, so daß eine Verschiebung des Spritzverstellkolbens 42 eine Verdrehung des Rollenkranzes 40 bewirkt, wodurch sich die relative Lage der Rollen 39 zu den Nocken der Nockenscheibe 38 ändert, was eine Änderung des Förderbeginns oder Druckhubbeginns des Pumpenkolbens 3 in Bezug auf die Drehlage der Antriebswelle 18 zur Folge hat. Der Spritzverstellkolben 42 wird durch den im Saugraum 9 herrschenden Überdruck beaufschlagt, der sich über einen im Kolben 42 verlaufenden Kanal 43 in einen Arbeitsraum 44 vor der Stirnfläche des Kolbens überträgt. Je nach Höhe dieses Druckes wird der Kolben 43 entgegen der Kraft einer Rückstellfeder 45 mehr oder weniger verschoben, was zu einer entsprechenden Änderung des Spritzbeginns führt.

Die Steuerung des Überdrucks im Pumpensaugraum 9 erfolgt einerseits mittels eines Drucksteuerventils 47 und andererseits mittels der Verstellmuffe 32 des Fliehkraftreglers 26. Das Drucksteuerventil 47 arbeitet mit einem Kolben 48, der gegen eine Rückstellfeder 49 durch den von der Förderpumpe 16 geförderten Kraftstoff verschiebbar ist und dabei eine Abflußöffnung mehr oder weniger aufsteuert. Von der Abflußöffnung führt ein Rücklaufkanal 50 zur Saugleitung 17 der Förderpumpe 16. Durch die Verstellmuffe 32 wird dieser Druck im Saugraum noch einmal lastabhängig gesteuert, indem durch die Verstellmuffe 32 ab einer bestimmten axialen Lage ein Entlastungskanal 52 aufgesteuert wird, der ebenfalls zur Saugleitung 17 der Förderpumpe 16 führt. Dieser Kanal wird erst dann aufgesteuert, wenn die Reglermuffe 32 weitgehend ausgefahren ist, d. h. eine verhältnismässig hohe Drehzahl erreicht ist, wonach dann durch Abströmen von Kraftstoffmengen aus dem Saugraum 9 in diesen Entlastungskanal 52 eine relative Druckabnahme mit der Drehzahl in diesem Saugraum 9 entsteht, was einen entsprechenden Einfluß auf den Spritzbeginn hat. Durch die verursachte Druckminderung des Saugraumdrucks wird eine relative Spätverschiebung erzielt. Durch den Verstellhebel 30 wird eine bestimmte Solldrehzahl bzw. ein bestimmter Lastzustand dem Regler eingegeben. Um diese vorgegebene Solldrehzahl zu erreichen, wird eine Drehzahlerhöhung eingestellt. Die Fliehgewichte 34 verschieben mit steigender Drehzahl die Reglermuffe 32 gegen den durch den Verstellhebel 30 vorgegebenen Lastzustand. Einerseits wird dadurch im Rahmen der normalen Regelfunktion des Drehzahlreglers die Fördermenge reduziert und zum anderen wird der Entlastungskanal 52 aufgesteuert, was. zu der beschriebenen Druckminderung im Saugraum 9 führt. Bei Änderung des Lastzustandes wird die Verstellmuffe 32 so verschoben, daß der Entlastungskanal 52 wieder gesperrt wird mit der Folge eines entsprechenden Ansteigens des Saugraumdrucks, wodurch der Einspritzzeitpunkt wieder in Richtung « früher » verstellt wird.

Um die eingangs genannte Reduzierung der Vollasteinspritzmenge zu erhalten, wirkt der Regelhebel 28 mit einem Vollastanschlag 54 zusammen, der auf einer Achse 55 schwenkbar gelagert ist und einerseits mit der Raumkurve 56 eines Verstellkolbens 57 zusammenwirkt und andererseits mit dem freien Ende des Reglerhebels 28, an dem die Reglerfeder 29 angreift. Der im Saugraum 9 herrschende Druck pflanzt sich über eine Bohrung 58 in einen Raum 59 fort, in den der Verstellkolben 57 taucht. Der vom Saugraumdruck auf den Verstellkolben 57 gebildeten Kraft wirkt eine Rückstellfeder 60 entgegen. Je nach Höhe des Saugraumdrucks nimmt der Verstellkolben 57 eine andere Lage ein, so daß sich der Anschlag des Hebels 54 für den Regelhebel 28 drehzahlabhängig ändert. Da sich der Saugraumdruck auch lastabhängig ändert, erfolgt eine entsprechende Verstellung des Anschlags lastabhängig.

Bis auf den Gegenstand der hydraulischen Verstellung des Vollastanschlags wird die beschriebene Kraftstoffeinspritzpumpe seit vielen Jahren in Serie von der Firma Robert Bosch GmbH hergestellt. In Fig. 3 sind nun die die Erfindung betreffenden Teile dieser Pumpe mit entsprechenden ·Ergänzungen herausgezogen und in vergrößertem Maßstab dargestellt.

Die Verstellvorrichtungen für den hydraulischen Vollastanschlag sind in einem Gehäuseabschnitt 62 untergebracht, der zum Saugraum 9 hin offen an das Pumpengehäuse 1 geflanscht ist. Hierbei ragen die Hebel des Drehzahlreglers 22 und 28 in diesen Gehäuseabschnitt 62 hinein. Der Raumnocken 56 auf dem Verstellkolben 57 wird durch einen Stift 63 abgetastet, der im Gehäuseabschnitt 62 gelagert ist. Im übrigen entsprechen die Bezugszahlen denen in Fig. 2. Die Anschlagsstelle zwischen dem Vollastanschlag 54 und dem Reglerhebel 28 ist als Schalter 66 ausgebildet, durch den eine elektrische Leitung zu einem Magnetventil 64 schaltbar ist. Diese elektrische Leitung läuft zum Teil über den Vollastanschlag 54, über den Reglerhebel 28 und über einen Draht 65. An der Kontaktstelle des Schalters 66 ist eine entsprechende Abisolierung vorgesehen, so daß bei Berühren des Reglerhebels 28 am Anschlag 54 ein Kontakt entsteht. Das Magnetventil 64 ist in eine Abflußleitung 67 des Arbeitsraumes 44 des Spritzverstellers geschaltet, die zum druckentlasteten Raum 68 auf der anderen Seite des Spritzverstellkolbens 42 führt, in dem die Rückstellfeder 45 angeordnet ist. In dieser Abflußleitung 67 ist stromab des Magnetventils 64 eine Drossel 69 vorgesehen. Alternativ kann auch im Abfluß des Federraumes 68, der normalerweise druckentlastet ist, eine Drossel 70 angeordnet sein.

Die erfindungsgemäße Kraftstoffeinspritzpumpe arbeitet wie folgt : Solange der Schalter 66 geschlossen ist, d. h. solange mit Vollast gefahren wird, arbeitet der Spritzversteller in üblicher Weise. Das Magnetventil 64 ist gesperrt und der Spritzverstellkolben 42 nimmt eine dem Druck im Saugraum 9 entsprechende Lage ein, die mit zunehmender Drehzahl nach « früh » verstellt wird und die der Last angepaßt ist. Wenn durch plötzliche Laständerungen von Vollast in Richtung Teillast — der Fahrer nimmt das Gaspedal zurück — der Schalter 66 unterbrochen wird, schaltet das Magnetventil 64 in die dargestellte Schaltlage, so daß aus dem Arbeitsraum 44 Kraftstoff abströmen kann und der Spritzverstellkolben 42 sehr schnell in Richtung « spät » verschoben wird. Hierdurch wird erreicht, daß bei schnellen Lastwechseln der Spritzbeginn entsprechend schnell korrigiert wird. Durch die Drossel 69 wird erreicht, daß diese Verstellung nicht zu einer ungewünschten . schlagartigen Änderung des Spritzbeginns führt, wobei dieser Übergang durch Verstellung des Drosselquerschnitts steuerbar ist. Hierbei ist zu berücksichtigen, daß auch im Kanal 43 stets eine Dämpfungsdrossel vorgesehen ist, die mit der Drossel 69 abgeglichen werden muß.

Die alternative Lösung mit der Drossel 70 statt der Drossel 69 arbeitet so, daß im Federraum 68 bei Aufsteuern des Magnetventils 64 aufgrund der nachgeschalteten Drossel 70 ein Stau entsteht, der ebenfalls eine beschleunigte Verstellung des Spritzverstellkolbens 42 in Richtung « spät », also nach rechts in der Zeichnung, zur Folge hätte.

Sobald dann wieder der Schalter 66 und entsprechend das Magnetventil 64 geschlossen ist, arbeitet der Spritzbeginnversteller in der gewohnten Art. Während des Getrenntseins des Schalters 66 arbeitet allerdings der Spritzbeginnversteller weitgehend unabhängig von der Drehzahl, so daß die tatsächliche Verstellung lediglich von der Last abhängt, die entweder durch die Brennkraftmaschine oder durch den Verstellhebel der Pumpe eingegeben wird.

**Patentansprüche**

1. Kraftstoffeinspritzpumpe mit einem die Förderbewegung mindestens eines Pumpenkolbens bewirkenden Nockenantrieb, dessen im Pumpengehäuse gelagerter Teil (40) zwecks Spritzbeginnverstellung relativ zu seinem umlaufenden Teil durch einen von einer Rückstellkraft (45) beaufschlagten Verstellkolben (42) verstellbar ist, der in einem Zylinder einen Rückstellraum (68) von einem Arbeitsraum (44) trennt, welcher Arbeitsraum über eine drosselnde Verbindung (43) mit einer einen drehzahlabhängig gesteuerten Druck erzeugenden Förderpumpe (16) verbunden ist, und von dem eine Abflußleitung (67) abführt, in der ein Magnetventil (64) und eine Drossel (69, 70) angeordnet sind, wobei in der Stromzufuhr zum Magnetventil ein Schalter (66) angeordnet ist, und mit einem die Einspritzmenge bestimmenden Drehzahlregler (26) mit einem Lastabhängig verstellbaren Verstellglied (28), das mittels eines Schiebers (20) einen mit dem Pumpenarbeitsraum (6) verbundenen Entlastungskanal steuert, und mit einem mit diesem Verstellglied (28) zusammenwirkenden, die jeweilige Vollastmenge begrenzenden Anschlag (54), dadurch gekennzeichnet, daß der Anschlag ein vom drehzahlabhängig gesteuerten Druck gegen eine Rückstellkraft (60) verstellbarer Anschlag (54, 55, 63, 56) ist und das lastabhängig verstellbare Verstellglied (28) und der Anschlag (56) unmittelbare Teile des elektrischen Schalters sind und bei gegenseitigem Berühren den Stromkreis schließen.

2. Kraftstoffeinspritzpumpe nach Anspruch 1, dadurch gekennzeichnet, daß die Abflußleitung (67) mit der Entlastungsleitung des Rückstellraums (68) verbunden ist und daß die Drossel (70) stromab der Verbindungsstelle in der Abflußleitung (67) angeordnet ist.

**Claims**

1. Fuel injection pump comprising a cam drive which causes the delivery movement of at least one pump piston and the part (40) of which is supported in the pump housing can be adjusted, for the purpose of adjusting the beginning of injection, relative to its circulating part by means of an adjusting piston (42) to which a restoring force (45) is applied and which separates a restoring space (68) from a working space (44) in a cylinder, which work space is connected via a throttling connection (43) to a delivery pump (46), which generates a speed-dependently controlled pressure, and from which an outflow line (67) leads away in which a solenoid valve (64) and a throttle (69, 70) are arranged, a switch (66) being arranged in the power supply to the solenoid valve, and with a speed controller (26) which determines the injection quantity, with a load-dependently adjustable adjusting member (28) which controls, by means of a slide valve (20), a relief duct connected to the pump working space (6), and with a stop (54) which operates in conjunction with this adjusting member (28) and limits the respective full-load quantity, characterized in that the stop is a stop (54, 55, 63, 56) which can be adjusted by the speeddependently controlled pressure in opposition to a restoring force (60) and the load-dependently adjustable adjusting member (28) and the stop (56) are direct parts of the electric switch and close the circuit when they come into contact with each other.

2. Fuel injection pump according to Claim 1, characterized in that the outflow line (67) is connected to the relief line of the restoring space (68) and that the throttle (70) is arranged downstream of the connecting location in the outflow line (67).

**Revendications**

1. Une pompe à injection de carburant comprenant un entraînement à cames provoquant le mouvement d'alimentation d'au moins un piston de pompe dont une partie est logée dans un carter de pompe (40), en vue de la régulation du démarrage de l'injection par rapport à sa partie rotative, peut être régulée par un piston de réglage (42) appliqué par un ressort de rappel (45), qui sépare, dans un cylindre, une chambre de rappel (68) d'une chambre de travail (44), laquelle est reliée par une jonction à diaphragme (43) à une pompe d'alimentation (16) produisant une pression déterminée en fonction de la vitesse de rotation et d'où part une conduite de sortie (67), dans laquelle se trouvent une soupape électro-magnétique (64) et un diaphragme (69, 70), où dans l'arrivée du flux à la soupape-électromagnétique disposé un commutateur (66) et avec un régulateur de la vitesse de rotation (26) comportant un organe (28) réglable en fonction de la charge (26) qui commande un canal de décharge relié à la chambre de travail de la pompe (6) au moyen d'un tiroir (20) et une butée (54) coopérant avec l'organe de réglage (28), limitant chaque fois la quantité à pleine charge, caractérisée en ce que la butée est une butée de réglage (54, 55, 63, 56) par une pression en fonction de la vitesse de rotation à l'encontre d'un ressort de rappel (60) et l'organe de régulation réglable (28) et la butée (56) constituant des parties intégrantes du commutateur électrique et par mise en contact sur les côtés opposés, ferment le circuit.

2. Pompe à injection de carburant selon la revendication 1, caractérisée en ce que la conduite de sortie (67) est reliée à la conduite de décharge de la chambre de ressort (68) et que le diaphragme (70) est placé en aval du point de jonction dans la conduite de sortie (67).

Fig.1

Fig.2

Fig.3